# EUROPÄISCHE PATENTANMELDUNG

(11) **EP 0 629 434 A1**
(43) Veröffentlichungstag der Anmeldung: **21.12.1994**
(21) Anmeldenummer: 94113628.5
(22) Anmeldetag: 20.12.1990
(51) Int. Cl.: B01D 67/00, B01D 69/00, B01D 29/48, B01D 69/14, B01D 37/02

(54) **Verfahren zur Herstellung einer Membran zur Mikrofiltration, Ultrafiltration, Pervaporation oder Umkehrosmose von Suspensionen, Emulsionen oder zur Gastrennung**

(30) Priorität: 21.01.1990 DE 4001654; 17.07.1990 DE 4022738
(62) Teilanmeldung aus: 90124938.3
(71) Anmelder: Altenburger Electronic GmbH, D-77956 Seelbach (DE)
(72) Erfinder: Siegfried, Hans-Günther, D-77933 Lahr (DE)
(74) Vertreter: Eder, Eugen, Dipl.-Ing.

(57) **Zusammenfassung**

Bei dem Verfahren zur Herstellung einer Membran (1) zur Mikrofiltration, Ultrafiltration, Pervaporation oder Umkehrosmose von Suspensionen, Emulsionen oder für Gastrennungen wird eine aus Draht gewickelte, rohrförmige Membran (1) verwendet. Es werden Substanzen zwischen den Membranwindungen (2) lose vor den Membranporen (3) eingebracht, die eine Feintrennschicht (4) bilden. Diese Feintrennschicht (4) wird von im Feed vorhandenem oder von diesem zugesetzten Substanzen gebildet.

## Beschreibung

Die Erfindung betrifft ein Verfahren zur Herstellung einer Membran zur Mikrofiltration, Ultrafiltration, Pervaporation oder Umkehrosmose von Suspensionen, Emulsionen oder für Gastrennungen mit den Merkmalen des Oberbegriffs des Patentanspruches 1.

Es sind Verfahren und Filtervorrichtungen zur Mikrofiltration von Partikeln aus Suspensionen oder Gasen unter Verwendung einer rohrförmig aus Draht gewickelten Membran bekannt. Hierbei werden die Membranwindungen unter Vorspannung gewickelt. Das Feed wird unter Druck durch die Membran geführt. Die schlitzförmigen Membranporen zwischen benachbarten Membranwindungen ermöglichen die Trennung der zu filternden Partikel aus dem Feed. Nachteilig ist, daß ein solches Verfahren zur Mikrofiltration nicht das Abtrennen von Partikeln zur Ultrafiltration, die Pervaporation oder die Gas/Gastrennung zuläßt.

Aus der EP-A-0 213 941 ist ein Filterverfahren und ein Filter bekannt, bei dem ein rohrförmiges, aus einem Draht gewickeltes Filter verwendet wird, dessen eine Seite mit einem Halterteil fest verbunden ist, an den sich eine Betätigungsstange anschließt, die durch das Filter geführt ist. Mit der Betätigungsstange kann das rohrförmige gewickelte Filter gedehnt oder zusammengedrückt werden. Das Verändern des Filters dient lediglich dazu, die Porengröße den jeweiligen Gegebenheiten entsprechend zu verändern.

Aus der DE-A 38 17 578 ist ein Verfahren und eine Vorrichtung zur Mikro- und Ultrafiltration sowie zur Umkehrosmose bekannt. Hierbei findet vorzugsweise eine Membran Verwendung, die von einem Rohrkörper aus mit Vorspannung gewickeltem Draht gebildet ist. Diese Membran kann mit einem die Porengröße verringernden, begrenzt elastisch streckbaren Materialauftrag versehen sein. Diese Membran wird in einer Filtrationsvorrichtung verwendet. Der Filtrationsvorgang kann sowohl im Durchflußverfahren mit Querstromeffekt als auch im Deadend-Verfahren durchgeführt werden.

Aus der DE-A 35 22 725 ist eine mit oder ohne Vorspannung aus Draht spiralförmig gewickelte Membran bekannt, die mit einem Materialauftrag versehen ist. Der Materialauftrag kann vor oder nach dem Wickelprozess aufgebracht werden. Er kann aus feinsten, organischen oder anorganischen Partikeln bestehen. Diese können mit ihren kristallinen oder gitterförmigen Strukturen und ihren Zwischenräumen erhöhte und für den speziellen Anwendungsfall geeignete Filterwirkungen ausüben. Als Partikel können Graphit-, Graphitoxid-, Metall-, Metalloxid-, Keramik- und andere Partikel, die allein oder gemeinsam mit einem Trägermaterial (Suspension, z. B. aus Wasser, Fett oder Öl) auf die Drähte oder Fasern aufgebracht oder in die Zwischenräume der Spirale eingebracht und anschließend fest mit der Membran verbunden werden. Die Filterwirkung der Partikel entsteht durch deren Porosität. Nachteilig ist, daß die Herstellung solcher Membrane aufwendig ist. Da die Partikel fest an der Membran angebracht sind, besteht die Gefahr, daß die Durchgänge durch diesen Materialauftrag bei der Filtration verstopft werden und eine Rückflußreinigung nur schwer durchführbar ist. Außerdem wirken die für den Materialauftrag benutzten Partikel nur aufgrund der von ihnen gebildeten Durchlässe, also der entstehenden Porösität, nicht aber aufgrund anderer Wirkungen, wie Affinität zu bestimmten Stoffen oder dergleichen.

Die EP-A-0 319 893 beschreibt ein Verfahren zur Herstellung eines Filters in Form einer Scheibe, wobei die Filterscheibe mit einer die Porengröße bestimmenden Membran fest verbunden ist.

Die GB-A 926 138 beschreibt ein Filter, bei dem Filterrückstände, die zur Verstopfung führen könnten, weitgehenst vermieden werden sollen. Daß die Filterrückstände als Feintrennschicht wirken, ist bereits erkannt.

Die US-PS 4 693 835 beschreibt ein Filter bei dem das Filter mit einer filterwirksamen Schicht fest überzogen ist.

Der Erfindung liegt die Aufgabe zugrunde, auf einfache Weise die Trenngrenzen dieser bekannten Filtermembranen deutlich zu verringern, damit die Größe der abzutrennenden Teilchen aus einem Feed bis in den Ultrabereich (Mol. Trennbereich) möglich wird und Pervaporation sowie Gas/Gastrennungen, gegebenenfalls unter Verwendung von Composite-Membranen oder Trennmembranen, durchführbar werden.

Die Erfindung löst diese Aufgabe mit den kennzeichnenden Merkmalen des Patentanspruches 1.

Die Erfindung bietet den Vorteil, die Porengröße zwischen benachbarten Windungen einer rohrförmigen Membran einer Filtervorrichtung auf indirektem Wege durch Einlagerung einer Feintrennschicht zu verringern, dadurch gelingt es, in den Ultrafiltrationsbereich zu gelangen und auch Pervaporationen sowie Gas/Gastrennungen durchzuführen. Hierbei wirkt die Feintrennschicht als Filter-, Phasen- oder Gastrennelement, wogegen die rohrförmige Membran im wesentlichen als Stützgerüst mit Mikrofiltrationseigenschaften für die weitergehende Feintrennschicht dient. Somit kann der Durchmesser des Drahtes für die Membranwindungen groß gewählt werden. Die Anwendung hoher Filtrationsdrücke und die Erzielung hoher Filterleistungen werden möglich. Die Feintrennschichten werden von Substanzen gebildet, die im Feed vorhanden sind oder diesem während der Filtration zugesetzt werden. Aufgrund der Querstromwirkung oder im Deadendverfahren werden diese Substanzen den Poren zur Bildung der Feintrennschicht zugeleitet. Die Feintrennschicht wird dabei in Form der losen Substanzen gegebenenfalls unter laufendem Austausch der Substanzen, aufrechterhalten. Die Feintrennschicht kann porös oder transportaktiv je nach den verwendeten Substanzen ausgebildet werden.

Weitere Ausgestaltungen der Erfindung ergeben sich aus den Unteransprüchen. Die Erfindung wird nachfolgend anhand eines in der Zeichnung dargestellten Ausführungsbeispieles näher erläutert. In der Zeichnung zeigen:

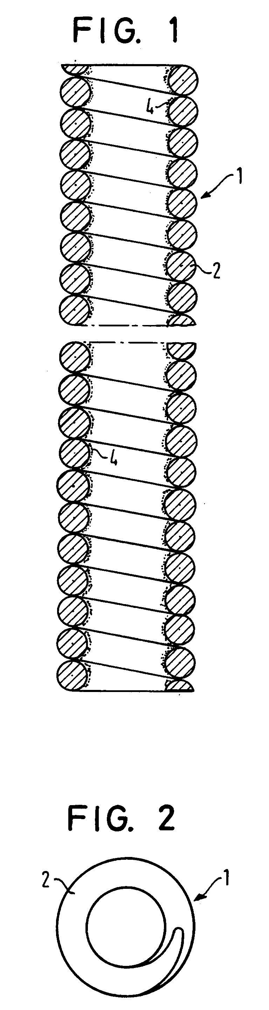

- Fig. 1: einen Vertikalschnitt einer rohrförmigen Membran, die in einer üblichen, nicht dargestellten Filtervorrichtung verwendet ist;
- Fig. 2: eine Draufsicht der Membran nach Fig. 1;

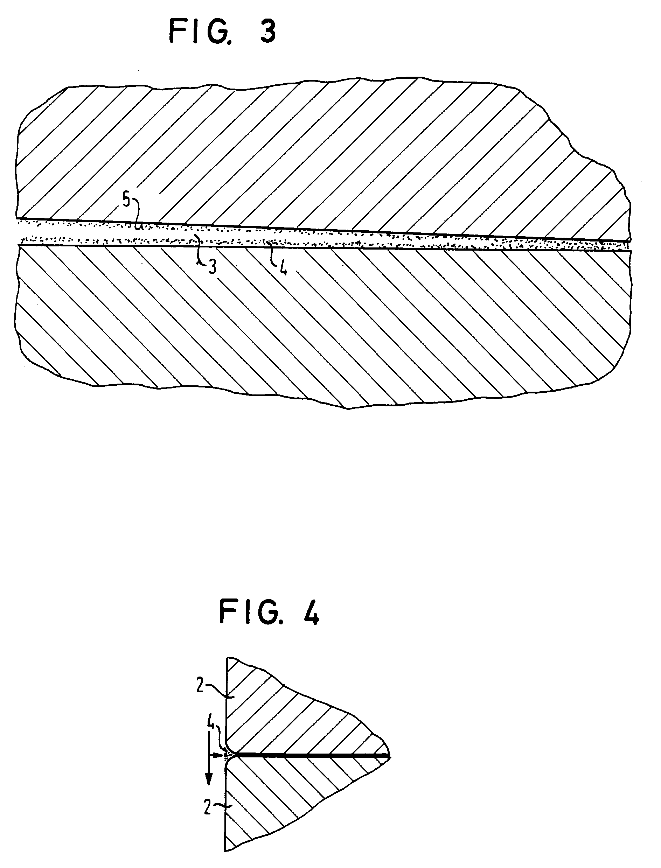

- Fig. 3: eine stark vergrößerte Teilschnittansicht eines Windungsspaltes mit einer an der Membran lose anliegenden porösen, oder homogenen, transportaktiven Trennschicht und
- Fig. 4: eine Teilansicht im Schnitt.

Eine übliche, nicht dargestellte Filtervorrichtung weist eine oder mehrere rohrförmige Membrane 1 auf. Hierfür wird ein Draht spiralförmig, vorzugsweise mit großer Vorspannung, gewickelt. Als Drahtmaterial findet Metall, Kunststoff, Glas oder anderes Material Verwendung. Der Drahtquerschnitt kann kreisförmig, oval oder mehreckig sein.

Der Durchmesser, insbesondere des Metalldrahtes, ist so groß gewählt, daß die rohrförmige Membran einen Filtrationsdruck im Mittel- und Hochdruckbereich von 1 bis > 1000 bar standhält.

Die zwischen benachbarten Windungen der Membran 1 entstehenden schlitzförmigen Poren 3 können wegen produktionsbedingter Unebenheiten der Drahtoberfläche nicht unter 0,5 µm reduziert werden. Durch entsprechend hohen axialem Druck auf die Membran 1 können diese Unebenheiten eingeebnet werden. Dadurch ist es möglich, die Porengröße bis auf 1 nm zu reduzieren.

Eine solche Membran mit oder ohne Vorspannung gewickelt, kann zur Filtration eines flüssigen oder gasförmigen Feeds mit einer zugeordneten porösen oder transportaktiven Trennschicht vorgesehen sein.

Zur Bildung der porösen Schicht 4 können anorganische Bestandteile, z. B. Glaspulver bis in den Körnungsbereich von 0,1 µm, Keramikkörper, Metallpulver oder andere pulverförmige Materialien in so geringem Umfang in das Feed eingebracht werden, daß sich in Folge der bei der Filtration herrschenden Querstromwirkung im filterwirksamen Bereich der Poren 3 nur eine Schicht mit ein bis zwei Körnungslagen bilden kann. Die anorganischen Bestandteile können vor dem Einbringen durch Siebung in gewickelten Metallmembranen mit definierter Porengröße sortiert werden.

Bei entsprechend geringer Verteilung der Bestandteile im Feed erfolgt eine Anlagerung nur im engsten Bereich der Abstände der Windungen 2. Der durch die Abstände der Windungen 2 gebildete Porenschlitz 5, der ohne vorgenannte Trennschicht 4 auch größere, scheibenförmige oder stabförmige Partikel permeieren läßt, wird so unterbrochen. Scheibenförmige oder stabförmige Partikel können nicht mehr permeieren.

Die durch den Porenschlitz 5 gebildete, ursprüngliche Porengröße verringert sich - in Abhängigkeit von der Größe der lose eingelagerten Partikel - weiter.

Es ist auch möglich, die Trennschicht 4 durch die in einer Suspension oder einem Aerosol vorhandenen Substanzen zu bilden. Hierfür wird die Membran 1 mit solcher Porengröße benutzt, daß sich vor den Poren 3 durch Ablagerungen der Substanzen eine Trennschicht 4 bildet.

Nach Bildung der Trennschicht 4 kann die Membran 1, z. B. durch eine Mikrometer-Zugvorrichtung, so gedehnt werden, daß die Trennschicht 4 die vergrößerte Pore 3 gerade noch überbrückt.

Durch Dehnung ist eine vergrößerte Pore 3 anzustreben, so daß eine Leistungserhöhung möglich ist.

Da die Filterleistung nicht allein vom dauernden oder gepulsten Querstrom, sondern auch vom Druck abhängt, kann der die Windungen 2 bildende Draht so stark gewählt werden, daß Filterdrücke von 1 bar bis > 1000 bar möglich werden. Hochdruckapplikationen der vorgenannten Art führen zu nennenswerter Leistungserhöhung und Qualitätsverbesserung des Permeats in Fällen, in denen die poröse Feintrennschicht 4 aus nicht kompressiblem Material besteht (z. B. bereits im Feed enthaltene ungelöste oder ausgefällte Metalle, absorbierende Materialien, wie Aktivkohle, Kieselgur oder Ceolithe oder Katalysatoren, die in Granulatform eingebracht werden).

Bei Verwendung eines mehreckigen, z.B. rechteckförmigen Drahtquerschnitts nach Fig. 4 ergibt sich an den Kanten benachbarter Windungen 2 infolge der kleinen Kantenradien ein kleiner Zwickelraum. Dieser kann nur wenige Lagen freier Bestandteile aufnehmen, die sich ständig durch die Wirkung des Längsstromes und des Querstromes des Feeds wirbelnd erneuern. Diese Bestandteile bilden eine Trennschicht 4, deren Poren nicht verstopfen können.

## Patentansprüche

1. Verfahren zur Herstellung einer Membran zur Mikrofiltration, Ultrafiltration, Pervaporation oder Umkehrosmose von Suspensionen, Emulsionen oder für Gastrennungen, bei dem eine aus draht gewickelte, rohrförmige Membran verwendet wird und Substanzen zwischen den Membranwindungen lose vor den Membranporen vorgesehen werden, die eine Feintrenntschicht bilden,
dadurch gekennzeichnet,
daß die Feintrennschicht (4) von im Feed vorhandenen oder von diesem zugesetzten Substanzen gebildet wird.

2. Verfahren nach Anspruch 1, dadurch gekennzeichnet, daß die Feintrennschicht (4) in Form einer Suspension, eines transparenten Polymerfilmes, miteinander verbundener Mikropartikel oder einer Komposite-Membran mit aktiver Trennschicht der Membran zugeleitet und dort abgelagert wird.

3. Verfahren nach Anspruch 1, dadurch gekennzeichnet, daß zur Bildung der Feintrennschicht (4) absorbierendes Material, z.B. Aktivkohle, Material mit Siebwirkung, z.B. Kieselgur, Material mit definierter Porengröße z.B. Zeolithe, katalytisch oder enzymatisch wirkende Substanzen, z.B. Platin, Paladium, oder angelagerte Enzyme verwendet werden.
